# EUROPEAN PATENT APPLICATION

(11) **EP 4 600 801 A1**
(43) Date of publication of application: **13.08.2025**
(21) Application number: 25156547.9
(22) Date of filing: 07.02.2025
(51) Int. Cl.: G06F 3/06

(54) **HOST-INITIATED READ AHEAD ON LOGICAL DEVICES**

(30) Priority: 09.02.2024 US 202418438223
(71) Applicant: Avago Technologies International Sales Pte. Limited, Singapore 768923 (SG)
(72) Inventor: Jana, Arun Prakash, Irvine, CA 92648 (US)
(74) Representative: Grünecker Patent- und Rechtsanwälte PartG mbB

(57) **Abstract**

Solutions for providing host-initiated read ahead caching on a virtual disk. In some implementations, the virtual disk might be part of a RAID environment. Some solutions expose to a host operating system the read ahead functionality of the virtual disk and allow the host to request prefetching of data from the virtual disk.

## Description

### Technical Field

This disclosure relates generally to RAID storage systems and more particularly to solutions for managing virtual disks in a RAID environment.

### Background

A redundant array of independent disks (RAID) storage system can logically consolidate multiple physical disks into one or more consolidated pools of storage resources. In many cases, a RAID controller will handle the management of these resources and will allocate the resources into one or more virtual disks (VD) (also referred to herein as "logical devices" or LD), each of which appears to the host (e.g., a computer operating system in communication with the controller) to be a single physical disk.

When a computer's operating system (OS) issues a read command to a storage device, such as a hard disk drive (HDD), solid-state drive (SSD), a RAID virtual disk, etc., the operation of the storage device introduces latency between the time a page is requested from the storage device and when the data is available to the OS. Often such requests are made to service the demands of an application running on the OS. To fetch pages earlier than they are actually accessed by the application, the OS implements a read ahead operation - a technique (internal to the OS) to detect sequential file reads by the application and request from the storage device the next chunk of file data anticipating it will be required soon. This data can be stored in an OS cache until needed by the application. More generally, the term "read ahead" is used herein to mean an operation in which a disk (which can be a VD or a physical disk) is read to obtain data before that data is actually required by an application requesting the data, and storing or caching the obtained data, e.g., in volatile memory. As noted above, a read ahead operation can be performed by an OS; read ahead operations can also be performed by other devices, such as a drive itself, a storage controller, and/or the like.

In many cases, there are intermediate hardware units between the OS and a storage device, which may have their own cache for input-output (IO) data. For example, in the context of a RAID controller (in which the computer and/or it's operating system are referred to as a "host"), read ahead is a feature that involves detection of sequential read IOs and early caching of VD data by reading the data from physical drives to memory. If subsequent reads from host request data that are on logical blocks (LBA) which are already loaded in the memory, the IOs can be completed much faster.

However, read ahead in the OS and the controller work independently. The LDs on the controller do not expose read ahead capability and the OS does not issue read ahead requests on LDs. There is a need for solutions that allow a RAID system to report read ahead capability of LDs and support OS-issued read ahead on LDs by extending the RAID system's internal read ahead capabilities.

### Brief Description of the Drawings

Figs. 1A and 1B illustrate exemplary RAID arrays and virtual disks in accordance with various embodiments.
Fig. 2 is a block diagram illustrating a RAID controller in accordance with various embodiments.
Fig. 3 is a process flow diagram illustrating various operations of the RAID controller of Fig. 2 in accordance with various embodiments.
Fig. 4 is a block diagram illustrating interactions among a host and various components of a RAID controller to perform a host-initiated read ahead in accordance with various embodiments.
Fig. 5 is a process flow diagram illustrating various operations of a RAID controller performing host-initiated read ahead in accordance with various embodiments.
Fig. 6 is a block diagram illustrating example components of a computer system in accordance with various embodiments.

### Detailed Description

In a set of embodiments, a device, such as a RAID controller, can expose read ahead functionality to a host computer, which can allow the host to make read ahead requests on a virtual disk managed by the device without the disadvantages imposed by traditional configurations, in which both the host OS and the virtual disk might have read ahead capabilities but those capabilities are not integrated and cannot perform optimally. Various embodiments can thus provide several advantages and/or solve several difficulties in providing such integration.

For example, in a typical host OS read ahead configuration, the OS read ahead cache size often is limited by a threshold at the file-system level. Allowing the OS to make use of the read ahead capability of a device below it results in the OS caching additional data. This improves the performance of large data transfers over the network, e.g., streaming videos or downloading gaming data files, which are flat and can be in order of GBs. But there are situations where the OS cannot perform - or has difficulty performing - OS-internal read ahead. For example, in some cases, the OS-based system can experience thrashing, when the read ahead pages are released back before they are actually read. In other cases, the OS cache reaches capacity and cannot cache further data. Under such conditions, the OS can still use the read ahead capabilities of the VD and prefetch data from the drives and RAID controller cache at a higher level from where the next read would be faster. This usage, however, presents other disadvantages.

For example, because the OS is not aware of the VD read ahead capabilities and cannot specifically request that functionality, the VD receives only raw LBA requests and might not always predict accurately which requests would be candidates for read ahead caching. Specifically, because the VD is not aware of the structure of the file (i.e., file system-level details), the algorithms employed by the VD are predictive, based on sequential accesses of LBA with respect to the VD itself, e.g., sequential stripes for RAID controllers. However, the file data layout on the drive LBAs may not be contiguous. In those cases, reading the next stripe leads to issuing useless reads to drives for the data that will not be requested by the host. Since the detection algorithm at the lower-level device (e.g., VD) is predictive, there can be high rate of false positives if the size of the files are small and the data can be read completely by the OS in a few reads. This would lead to unnecessary caching, since the controller firmware is not aware of file specifics and would read ahead the consecutive stripes.

Moreover, read ahead support in the controller involves continuous processing in hardware and firmware to detect sequential reads by opening and examining read IOs for patterns. In addition to continuous processing, this also affects read IO performance. Further, in RAID controllers, read ahead is generally a VD-specific feature, so VDs created on a storage controller may or may not support read ahead. Currently VDs on a storage controller do not advertise read ahead capability to a higher layer like the OS. A method to expose the capability would allow read ahead to be issued from the OS to the LDs. As described below, certain embodiments provide such capabilities and can overcome some or all of the difficulties described above.

### Virtual Disk Technology

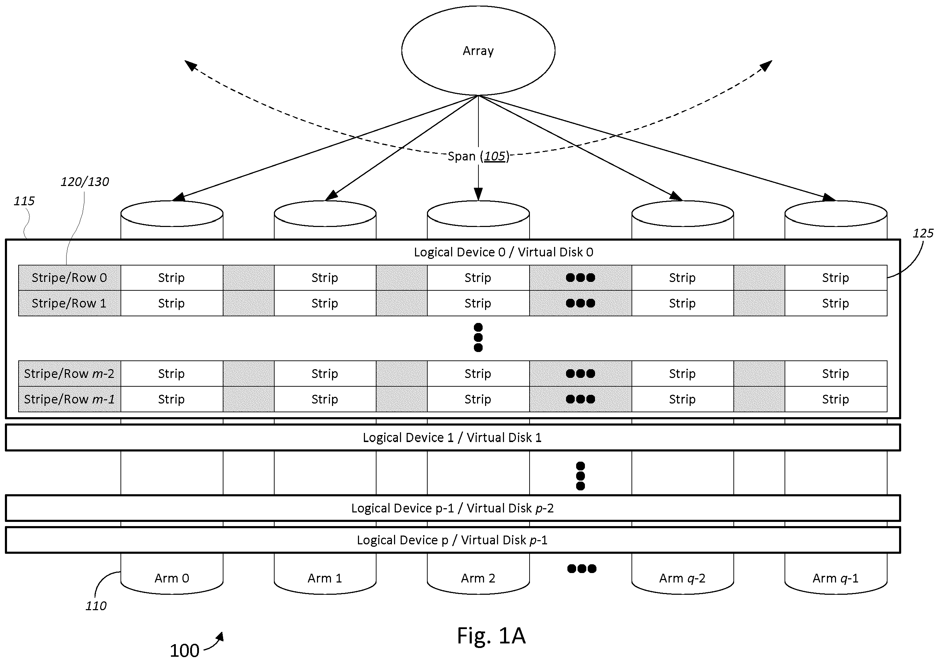

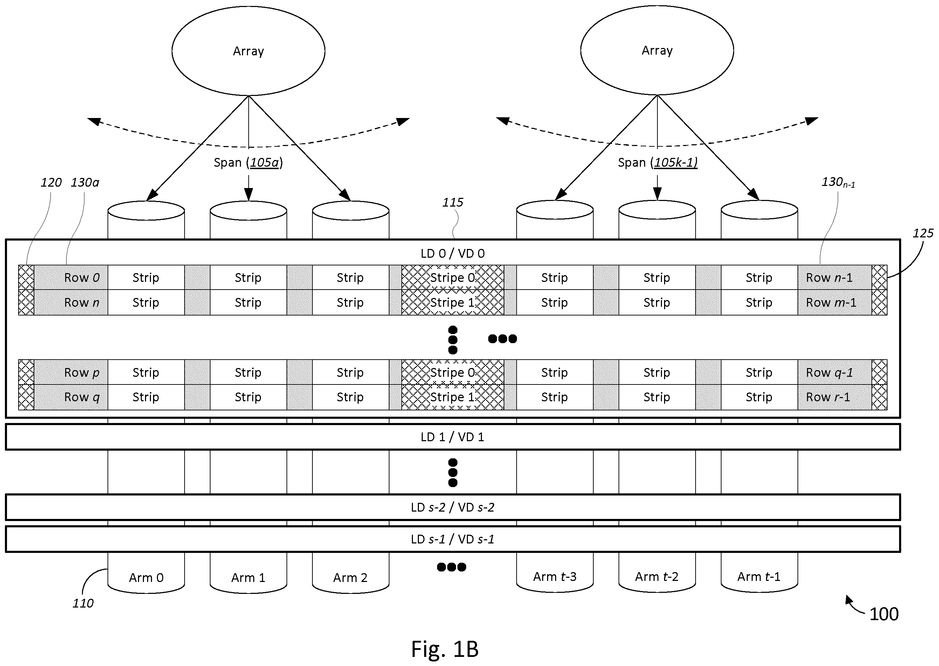

In some cases, a VD is part of a RAID array. Fig. 1A illustrates a single span RAID array 100, while Fig. 1B illustrates a multiple-span RAID array 100'. The array 100 of Fig. 1A utilizes a single span 105 of physical disks 110, each of which is also referred to herein as an "arm" of the VD. As illustrated on Fig. 1A, the array 100 is divided into a plurality of VDs 115. As illustrated by VD 115a, a VD 115 can include a plurality of stripes 120. Each stripe 120 includes a strip 125 from each arm 110 of the VD 115. A "strip" therefore describes a unit of storage on a single physical disk (arm). In an aspect, each strip 125 is the same size. As used herein the term "logical block" (LBA) means the smallest amount of data that can be written or read in a single drive IO, and each LBA has a fixed size (e.g., 4KiB). Each strip 125 generally is a fixed number of LBA, such that a strip 125 might be a multiple of the LBA size (e.g., 64KiB, 128KiB, 256KiB, etc.).

The multi-span array 100' of Fig. 1B is similar, except it includes multiple spans 105, each of which includes its own set of arms 110. In this case, a row 130 comprises the strips 125 from a single span 105, and the stripe 120 comprises the corresponding row 130 from each span 105. In some embodiments, all of the spans 105 are homogenous (e.g., each span 105 contains the same number of arms 110, the size of strips 125 in each span 105 is the same, etc.). In another aspect, a VD 115 starts on a stripe boundary. Thus, when comparing the arrays 100 and 100', each stripe 115 in the single-span array 100 is the same as a row 130 in the multi-span array 100'.

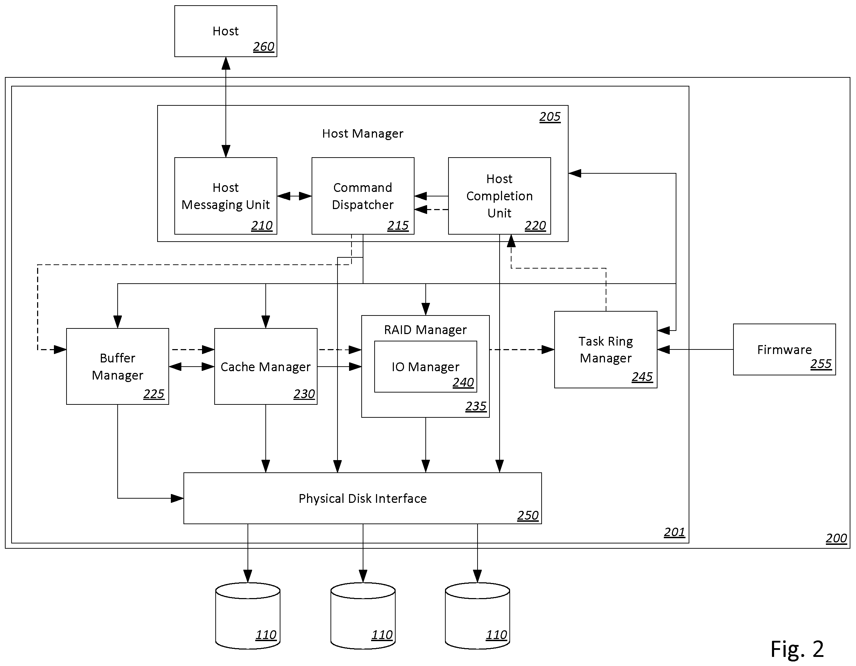

Fig. 2 illustrates an exemplary architecture for a device 200 *(e.g.,* a RAID controller) that can be used in various embodiments. (It should be noted that, while this disclosure describes certain embodiments in the context of a RAID controller or other storage controller for purposes of illustration, embodiments are not limited to those types of devices but instead can include any device capable of performing the functionality discussed herein.). In an aspect, the device comprises a set of hardware circuitry 201 (also referred to herein as simply "hardware"). This hardware circuitry 201 comprises several hardware components, each of which is encoded with circuitry to cause that component and/or the device 200 generally to perform, *inter alia,* the functions and procedures disclosed herein. The hardware circuitry 201 can comprise, without limitation, a host manager 205. The host manager 205 includes a host messaging unit (HMU) 210, a command dispatcher unit (CDU) 215, and a host completion unit (HCU) 220. The hardware circuitry 201 further comprises, in some embodiments, a buffer manager 225 and/or a cache manager 230. The hardware circuitry 201 can further comprise a RAID manager 235, which can include an IO manager 240, as well as a task ring manager 245, and/or a physical disk interface 255.

It should be noted that the device 200 illustrated in Fig. 2 is merely exemplary in nature, and many embodiments can comprise more, fewer, or different hardware components. In certain embodiments, each component of the hardware circuitry 201 performs discrete functions or tasks. In other embodiments, the hardware circuitry 201 can be considered to collectively perform such tasks, and/or the same or different components might perform other discrete tasks. Hence, embodiments are not limited to the structure disclosed in Fig. 2 unless explicitly stated; moreover, to the extent that an embodiment states that "hardware circuitry" itself performs a particular task, such an embodiment does not require any particular hardware component to perform that task.

In some embodiments, the device further comprises firmware 255, which, unlike the hardware circuitry 201, often includes instructions that can be executed by a processor, such as a microprocessor. The firmware 255 might generally comprise instructions stored on a persistent form of data storage, such as a programmable read only memory (PROM) or one of several derivatives, nonvolatile RAM, programmable logic devices (PLD), field programmable gate arrays (FPGA) and/or the like. The firmware 255 can be more adaptable and/or updateable (in some cases) than the hardware circuitry 201 and can perform more complex tasks. The cost of this complexity, however, is speed. Each component of hardware circuitry 201 generally is optimized to perform one (or a few) relatively simple tasks, but to do so very quickly. In contrast, as described herein, some embodiments execute firmware instructions to perform more complex tasks, like storing diverted host IOs, calculating and allocating buffer segments, and performing maintenance tasks. In each of these cases, the tasks of the firmware 255 can include providing instructions to the hardware circuitry 201. (As described further below, the term "logic" is used broadly herein to refer, without limitation, to instructions stored and/or performed by hardware circuitry, and/or a processor.)

In the illustrated embodiment, the HMU 210 provides communication between a host 260 and the device 200 (and/or components thereof), for example receiving host IOs from the host and providing IO completion confirmations to the host. As used herein, the terms "complete," "completion" and "completion message" mean a notification to the host or another component that an operation (e.g., an IO) has reached a particular status. In many cases, the entity (e.g., host, component), etc. that receives the completion message for an operation is the entity that requested or commanded the operation. A completion message need not indicate that a requested operation has been successfully completed, or necessarily that the requested operation has been concluded at all. For example, as described in further detail below, in some cases, a completion message might indicate that a particular operation (e.g., prefetching) will be completed at a later time (e.g., in the case of an immediate prefetch request) or that the operation cannot be completed.

The CDU 215 provides several control features for the device 200. For example, the CDU 215 can receive IOs, e.g. from the HMU 210, the firmware 255, etc. and, based on those requests, dispatch IO commands for execution (e.g., direct or transmit IOs to other components to be executed). Some embodiments feature a VD property table (VDPT). In some embodiments, the VDPT is stored in and/or and maintained by the CDU 215. In some embodiments, the VDPT includes a VDPT element for each VD configured in the system. For instance, the VDPT might comprise a VDPT element corresponding to each of the VDs 210a, 210b, 201c. In some embodiments, the VDPT stores a device handle for every VD in the system; this device handle can be a unique identifier of each VD. In a particular aspect of various embodiments, a VDPT element for a VD 210 can be used to store a value indicating whether the VD is configured to support read ahead.

As used herein, the term "IO" is used generally to mean any input-output operation on a VD, and/or a request or command to perform such an operation. Such operations can include, without limitation, read operations and write operations. In some cases, specific types of IO are mentioned herein where appropriate. While the term "IO" generally can mean a "read IO" (in which data is read from data source, such as a cache, VD, etc.) or a write "write" IO" (in which data is written to a data sink, such as a cache, VD, etc.), the present disclosure generally is directed to read operations; thus, unless the context dictates otherwise, the term "IO" as used herein, is meant to be sufficiently broad to include with "read IO."

Regarding the specific types of IOs, the actual read or write operations on the physical disks of the VD are referred to as "drive IOs." Likewise, the terms "execute," "perform," and "write" (and their derivatives) are used synonymously herein with regard to IOs, and they refer not only to the actual writing of data to disk, but any other actions that are performed along the path from receiving an IO from a host to writing an IO to cache or a VD. Drive IOs are the only input-output operations actually executed on the physical media (e.g., reading data from or writing data to disk); all other types of IOs are actually requests or commands (at various levels of abstraction) to perform one or more drive IOs. Thus, the term "IO," when used without modifiers, can refer to both the actual drive IO and/or any other IO (e.g., requests or commands to perform actions that will result in one or more drive IOs), including without limitation all such IOs described herein.

For instance, one type of IO is a request from a host 260 for data to be read from or written to the virtual drive; this type of IO is referred to as "host IOs." As used herein, the term "host" refers to any device or system (which can be hardware, software, etc.), other than the hardware 201 and firmware 255 of the device managing the RAID *(e.g.,* a RAID controller), that provides requests or commands for IOs. Examples of hosts can include the operating system (sometimes described herein as a "host OS") of a computer using a VD for storage, a storage area network (SAN) device, any other sort of networking device, and/or intermediary devices between any of these and the device *(e.g.,* a RAID controller) performing the procedures described herein. A host IO, in some embodiments, comprises a request to read or write data to the VD 115; this requested data might be of various sizes, and often will need to be divided by the device 200 for processing and/or for more efficient internal communication. In particular embodiments, the host IO can be considered a "SCSI IO" because it is received as part of a SCSI command from the host (e.g., a SCSI PREFETCH command).

Thus, as described further below, the device 200 itself can employ "accelerated IOs," (ACIO) which are internal communications within the device. As used herein, when a component is described as "transmitting," "directing," or executing" or "writing" a host IO, an ACIO, or an IO in general, those terms are meant to include, without limitation, the transmission, direction, execution, writing, etc. of an ACIO that has been generated from a host IO.

In some embodiments, ACIOs can include parent ACIOs. One type of parent ACIO is generated by a component of the hardware 201 (e.g., CDU 215) after the hardware 201 has received a host IO and determined that it should be executed at that time (rather than diverted). The host IO might have been received directly from the host or might have been diverted earlier and then resubmitted for execution, e.g., by the firmware 255. In some cases, the host IO might comprise a request for sufficient data reads/writes that it can be divided into different IOs (e.g., for parallel execution); in this case, the parent ACIO might be used to generate one or more child ACIOs, which are more granular requests for particular read/write operations on the virtual drive, and which can be performed by different threads in parallel, in accordance with some embodiments. In other cases, the parent ACIO is not used to generate any child IOs, and the parent ACIO can itself serve to accomplish the full request of the host IO. The parent ACIO (or, in appropriate cases the child ACIOs generated from the parent ACIO) then can be used to generate the drive IOs, which actually perform the read/write operations on the media of each physical disk. In some cases, a parent ACIO or child ACIO will be divided into a plurality of drive IOs, if the parent or child ACIO, for example, requires reads/writes to multiple arms, because each drive IO might be directed to a single arm (physical disk).

The HCU 220 is the endpoint for host IOs and receives notice, e.g., from the firmware 255, the cache manager 230, the IO manager 240, and/or any other hardware 201, when host IOs have been completed (e.g., completion confirmations). The HCU 220, in some embodiments, can provide such notice to the CDU 215, which can determine what, if any, additional actions should be taken with regard to a completed IO (e.g., notifying a host of the completion). In some embodiments, the buffer manager 225 handles interactions with buffer memory. In some embodiments, in which caching is employed for a VD, the cache manager 230 handles the caching of IOs prior to writing those IOs to disk. In some embodiments, for example, the cache manager 230 is responsible for performing IOs on the cache 265, which, as described herein, can provide better performance for the host 260 than writing IOs to the VD 115 (i.e., the arms 110). The cache manager 230 can also be responsible for flushing IOs stored in the cache 265 to the VD 115 when appropriate. While the cache 265 is shown as being incorporated by the cache manager 230, that arrangement is exemplary, and in many embodiments, the cache 265 will be located elsewhere on the device 200. In general, the cache 360 is a set of reserved memory (e.g., DRAM) that can be used to temporarily hold IO transactions rather than writing the IOs directly to the VD. Various embodiments can employ flexible caching strategies, examples of which are described herein. When a cache is used to store data for a read ahead operation, that cache can be considered a "read ahead cache."

In contrast, the RAID manager 335 handles most interactions between the device 300 and the physical disks (arms) 110. In particular embodiments, the RAID manager 235 comprises the IO manager 240, which handles low-level interaction with the physical disks 210, including the creation of drive IOs to instruct the physical disks 210 to execute the actual reads and writes on the physical media of the disks 110. This interaction is provided through the physical disk interface 250, which provides direct, low-level access to communicate drive-level instructions, such as drive IOs, to the physical disks. The physical disk interface 250 can comprise one or more network interface cards or other communication cards or ports to communicate with the physical disks 110 over a network such as a storage area network (SAN), serial attached small computer system interface (serial attached SCSI or SAS), connections, fibre channel connections, and/or the like.

The task ring manager 245 manages a task ring (shown by broken lines in Fig. 2), which provides high speed communications between the various components of the device 200, including the firmware 255 and the various components of the hardware 201. In a particular embodiment, the task ring carries messages (task ring messages or TRM) that are local to the controller 200 and are used for a variety of purposes while the controller 200 is operating. In an aspect, some TRMs can have a local message index (LMID) field or frame that can hold an ACIO and/or a reference to an ACIO. In another aspect, each ACIO is transmitted in its own TRM. The transmission of ACIOs by TRM provides for enhanced performance in the processing of IOs. For example, a host IO generally is transmitted using a standard message passing interface (MPI) message, which provides relatively slow communications compared to the task ring. This MPI message can be received by the hardware 201 *(e.g.,* the CDU 215), which can create a new parent ACIO from the host IO, if the hardware 201 determines that the host IO should be executed; if not, the hardware 201 (or a component thereof) can copy the data from the host IO into an LMID for diversion to the firmware 255 over the task ring. As noted above, in some cases, the CDU 215 (or another component) might generate child IOs from the parent IO, in which the IO data and other parameters from the parent ACIO might be shared and/or divided among the child ACIOs, for example as described in further detail below. The parent ACIO and/or child ACIOs can then be transmitted to other components for execution, e.g., as described below.

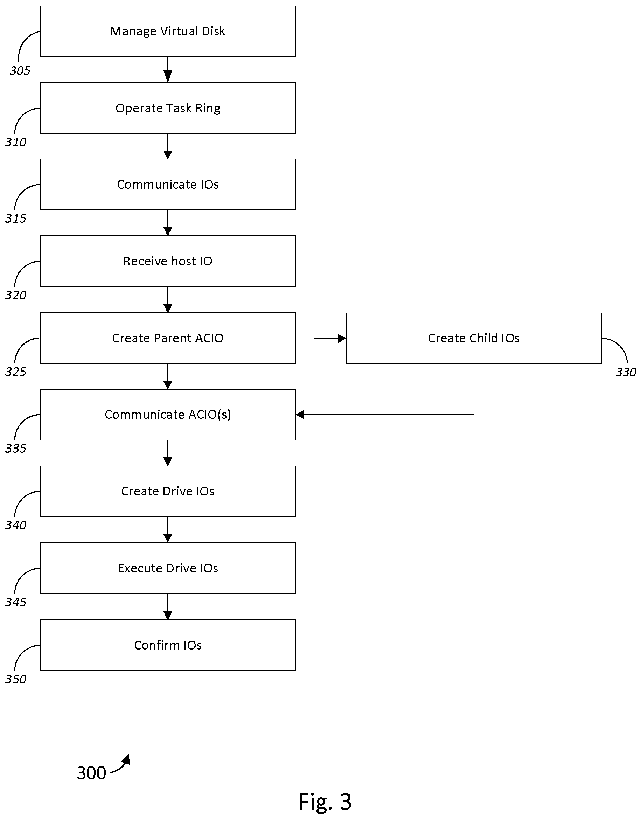

Fig. 3 illustrates a method 300 showing components of the exemplary device 200 above in one mode of operation. The method 300 comprises, at block 305, managing a VD. As noted above, a VD can comprise one or more spans, each of which can comprise one or more arms; each arm might comprise a physical disk. Also as noted above, the VD can comprise a plurality of stripes, each of which can comprise a row from each of the one or more spans; each row of a span can comprise a strip from each of the arms in the span, each of the strips comprising one or more, such that the plurality of LBA comprising one or more LBA from each of the arms of the span.

Managing a VD, therefore, can comprise many different operations, including without limitation, reading and/or writing data to the physical disks that serve as arms for the VD, controlling caching policies, organizing the physical disks into arms, arms into one or more spans, and/or spans into one or more VDs, maintaining and/or updating such organization (e.g., online capacity expansion operations or RAID level migration operations), performing maintenance operations (or portions thereof) on a VD, and/or the like. In some respects, these different operations might be divided among various components of a device 200; as used herein, "managing" a VD means performing all or part of any such operations. As such, different components of the device can be considered to be managing a VD, and the device itself can be considered to be managing a VD.

At block 310, the method 300 can comprise operating a task ring for communicating messages (TRMs) between the plurality of components. While some of the components do include various connections (as illustrated by the solid arrows in Fig. 2), the task ring (indicated by dashed arrows in Fig. 2) provides a high-speed communication ring that connects the task ring manager 245, the HCU 220, the CDU 215, the buffer manager 225, the cache manager 230, and the RAID manager 235. The task ring manager 245 also includes communication with the firmware 255. In particular, the task ring provides a way for components to communicate IOs as needed. For example, if an IO should be directed to, e.g., the cache manager 230 and/or the IO manager 240, the host IO can be communicated using the task ring (e.g., back and forth from the CDU 215 and the firmware 255); as noted above, in some embodiments, the host IO can be copied into an LMID for this transmission.

Thus, the method 300 includes communicating a plurality of host IOs via the task ring (block 315). Various examples of communicating IOs via the task ring are discussed in further detail below. For instance, in some embodiments, when a host read IO is received in the hardware circuitry 201 (block 320), the hardware 201 can determine whether or not the host read IO is a read ahead candidate (and/or whether host-initiated read ahead is available) and can direct the IO to the appropriate component depending on this determination.

As noted above, in some cases, before transmitting and/or directing a host IO, the device 200 might create an ACIO to transmit the data from the host IO; thus, the method 300 can include generating (e.g., creating) a parent ACIO from the host IO (block 325) and/or, if necessary, generating (e.g., creating) one or more child ACIOs from the parent ACIO (block 330). (As noted above, in some cases, the device 200 might not create any child ACIOs and might instead pass the parent ACIO to the next step in the process. In an aspect, the child IOs each can be performed by a different IO thread in the IO manager 240 and/or cache manager 230, allowing for parallel execution of different parts of the host IO/parent IO. In some embodiments the CDU 215 receives these host IOs and generates the ACIOs, although different embodiments can employ different hardware 201 and/or logic to perform these operations.

The parent ACIO or child ACIOs can then be communicated (block 335), e.g., via the task ring and/or directly, to be performed on the VD or the cache. (From this point, the method 300 proceeds in similar ways whether with a parent ACIO or child ACIOs, so the general term ACIO will be used to indicate that similarity.) In some cases, the ACIO(s) can be communicated to the IO manager 240, while in other embodiments, the ACIO(s) can be communicated first to the cache manager 230, which can execute them on the cache 260, and/or can forward the ACIO(s) to the IO manager 240 if necessary. Once again, however, embodiments do not require the performance of these operations by any specific component. When it is determined that the ACIOs should be executed in write-back mode, these ACIO(s) can be used (e.g., by the IO manager 240) to generate a plurality of drive IOs (block 340), each of which, as noted above, might send instructions to a different arm (physical disk) of the VD. These drive IOs then can be executed on the VD (block 345), e.g., by communications from the device 200 (and/or a specific component thereof, like the IO manager 240, to name one example) transported via the physical disk interface 250 to the relevant physical disk(s) 210 on which each drive IO should be performed. As noted, for IOs that should be cached, the parent ACIO or child ACIOs can perform the read or write directly on the cache and return, instead of executing drive IO(s) on the physical disks.

At block 350, the IOs might be confirmed. In some embodiments, for example, the IO manager 240 and/or cache manager 230 might receive confirmation of the reads/writes from the physical disks 210 and/or physical disk interface 250 and/or might transmit confirmation messages (*e.g.,* via LMID), *e.g.,* to the firmware 255, HCU 220, etc., to confirm that the host IO has been successfully executed. The HMU 210 might then confirm to the host that the host IO has been successfully executed.

This basic process 300 can be used (and/or modified) in various ways throughout various embodiments, as described in further detail below.

### Host-Initiated Read Ahead

As mentioned above, certain embodiments can expose VD read ahead Capabilities to the host to provide much more performant read ahead functionality than a typical system, in which any VD read ahead functionality is unaware of the nature of the data requested by the host OS.

For example, certain embodiments expose VD read ahead capability to the host using the small computer system interface (SCSI) application programming interface (API) INQUIRY command. Those skilled in the art will appreciate that the SCSI INQUIRY command supports Vital Product Data (VPD) pages that disclose device capabilities and limitations. One of the pages is Block Limits VPD page, which includes the following a maximum prefetch length field, *e.g.,* a MAX_PREFETCH_LENGTH. This field indicates the maximum pre-fetch length in logical blocks that the device server accepts for a single PRE-FETCH command. The SCSI mid-layer exposes this API to the OS to read VPD pages.

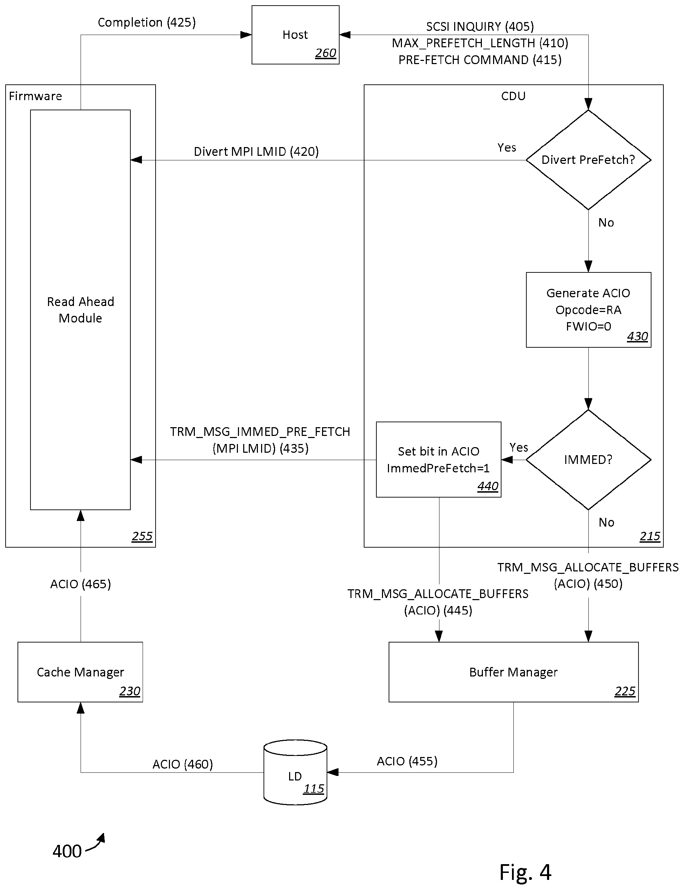

Figure 4 provides a simplified block diagram of a system 400 showing interactions between the host 260 and various components of a controller 200 during a host-initiated read ahead operation. (Note that certain components, such as the HMU 210, HCU 220, RAID manager 235, IO manager 240, and physical disk interface 250, have been omitted from Fig. 4 in the interest of simplicity, but such components can operate as described above, e.g., with respect to Figs. 2-3, during a host-initiated read ahead operation).

Thus, when the host 260 issues a SCSI INQUIRY command (405), the controller 200 (and/or a component thereof, such as the firmware 255) can respond with a VPD page (which might be delivered, *e.g.by,* the HMU 210, which as noted above handles communication between the controller 200 and the host 260). The VPD page can include the MAX_PREFETCH_LENGTH field (410). The host 260 OS can read this field and utilize it to ascertain that the RAID controller supports host-initiated read ahead. In accordance with certain embodiments, the read ahead feature is enabled on a per-VD basis at the time each VD is created. In such embodiments, for VDs supporting read ahead, a pre-determined read ahead buffer size will be set in the VD configuration. This value will be populated in the maximum prefetch length field (e.g., MAX_PREFETCH_LENGTH) of the Block Limits VPD page information when the OS sends the SCSI INQUIRY command for the VD. By reading the data, OS will be aware that read ahead is supported for the VD.

Additionally and/or alternatively, certain embodiments support the SCSI PRE-FETCH command for a VD; once the controller 200 exposes the read ahead capability to the host 260 OS, the host 260 OS can issue the SCSI PRE-FETCH command (415) to the VD. The SCSI specification discloses that the PRE-FETCH command requests that the device server transfer the specified LBA from the physical disk medium to the volatile cache and/or non-volatile cache. In certain embodiments, the PRE-FETCH command supports an immediate prefetch flag (*e.g.,* an IMMED bit). If the IMMED bit is set, the command can be completed early (*e.g.,* prior to the RAID controller finishing the performance of the actual read ahead operation) with the correct status, based on whether all the specified LBAs can be cached or not. Many embodiments provide storage (*e.g.,* RAID) controllers with abundant DRAM (*e.g.,* 16 GB) and hardware designed to queue and wait for buffers, the pre-fetched data generally can be cached.

As used in the context of configuration values such as flags or bits, the term "set" means the flag or bit is set to indicate that a feature is enabled or a condition is present. Often, by convention, this means that the bit or flag is set to a non-zero value (*e.g.,* "1" in the case of a bit flag), but this not required, and embodiments can vary. Conversely, describing a bit or flag as "unset," means that the feature or condition referenced by the bit or flag is disabled or not present (*e.g.,* by setting the bit or flag to a value of "0"). One skilled in the art will appreciate that there are a variety of techniques in the art to convey operational status, enable or disable certain features, etc. with flags, bitfields, and the like, and any such techniques can be used to "set" or "unset" a value, as those terms are used herein. Thus, any examples herein of setting or unsetting bits or flags should be considered exemplary and not limiting.

Given the hardware design of some embodiments, cache should be available under most circumstances. However, it is possible that under certain conditions (such as large amount of preserved cache generated when a VD becomes unavailable, to name one example), there is resource scarcity in the controller and/or VD, and the PRE-FETCH request cannot be serviced. To handle this scenario, some embodiments employ a divert prefetch control flag (*e.g.,* a DivertPreFetch bit) in the CDU Control Flags field of the VDPT entry for that VD. In certain embodiments, the firmware 255 will set this bit for the VD when controller/VD resources are low. Firmware 255 can also set this bit when the cache policy of a non-Parity VD has to be switched to write through, *e.g.,* due to conditions like bad battery. When the CDU receives an MPI SCSI IO with the PRE-FETCH command, if the DivertPreFetch is set for the VD, the CDU 215 will divert the IO (420) to firmware 255, which will complete (425) the IO (*e.g.,* to the host through the HMU) with appropriate status indicating that the data could not be cached.

For example, in this circumstance, a "no prefetch completion" might indicate that a condition prevents prefetching the requested data, while in other circumstances, a "prefetch completion" might indicate that the data has been cached, and/or an "immediate completion" might indicate that the data will be cached. (It should be noted, as discussed above, that in this context term "completion" is used to describe a communication between different components, and/or the controller 200 and the host 260) to describe a status of an IO, not necessarily to mean that the IO request has been performed on the VD. It should also be appreciated that descriptive identifiers used herein, such as "prefetch," "no prefetch" and "immediate" used to describe completion messages in this context, as well as field names, flag names, and the like described herein, are provided for descriptive purposes only and are not required by various embodiments unless specifically claimed.)

If the request is not diverted to firmware, the CDU 215 will generate an ACIO (425) with a read ahead flag (*e.g.,* IOA_MSG_OPCODE_READ_AHEAD) set. In some embodiments, an operation code (OPCODE) can be a type of flag that can be set or included, *e.g.,* in an ACIO, to identify an operation to be performed, such as read, write, read ahead, etc., as part of the IO. Another flag (such as a firmware IO flag, *e.g.,* a FWIO bit) in the ACIO MessageFlags field might be set to 0, indicating that this ACIO is not the product of a firmware-issued read ahead (which, in some embodiments, is a controller-internal read ahead operation separate from the host-initiated read ahead). The firmware 255 can check this bit to identify that this read ahead ACIO has been generated by the hardware 201. This can also ensure that any controller-internal read ahead operations remain functional. (It should be noted, however, that in some embodiments, enabling controller-internal, (*e.g.,* firmware-issued) read ahead operation is not necessary to support host-initiated read ahead. The choice to enable controller-internal read ahead can be exposed through the application, and/or users can disable it at the time of VD creation so that only host-initiated read ahead is enabled.)

A SCSI IO immediate prefetch flag (*e.g.,* an IMMED bit set in the PRE-FETCH command) indicates that the host 260 would like the controller 200 to complete the IO early. If so, the controller 200 can send a completion message to confirm the read ahead request before the read ahead operation has been finished by the hardware. In that case, the hardware (*e.g.,* CDU 215) will send a new message (*e.g.,* a TRM_MSG_IMMED_PRE_FETCH message over the task ring) (435) to the firmware 255 with the MPI SCSI IO LMID. The firmware can then complete the IO (425) with appropriate status indicating that the data will be cached, e.*g.,* with an immediate completion message. The hardware (*e.g.,* CDU 215) might set an ACIO immediate prefetch flag (*e.g.,* a new bit named ImmedPreFetch (440)) in the ACIO message flags, which will indicate to firmware 255 that the PRE-FETCH command has already been completed. The CDU 215 (or other controller component) will send a TRM_MSG_ALLOCATE_BUFFERS message (445) along with the ACIO LMID to Buffer Manager 225.

If the IMMED bit is not set in the PRE-FETCH command, the CDU 215 (or another controller component) will simply send the TRM_MSG_ALLOCATE_BUFFERS message (450) along with the ACIO LMID to the buffer manager 225.

The controller will execute the ACIO provided to the buffer manager 225 on the VD (455) (*e.g.,* as described above with respect to Figs. 2 and 3), and the ACIO (460) will be forwarded to the cache manager 230. The data read from executing the ACIO on the VD will be cached. Once the data is cached, the cache manager 230 will forward the ACIO (465) to the firmware 255, e.g., as part of a cache completion message (indicating to the firmware 255 that the caching has been performed successfully). Once the IO is received in firmware 255, the firmware 255 will identify the IO as a hardware-generated (*e.g.,* host-initiated) read ahead by checking the FWIO bit. The firmware 255, in some embodiments, will read the ACIO fields and set up firmware-internal data structures to manage the read ahead data. The firmware 255 will also check the ImmedPreFetch bit. If that bit is not set, firmware will complete the IO (425) with appropriate status indicating that the data has been cached.

This exemplary process can provide numerous benefits over existing techniques. For example, in certain embodiments, exposing the controller read ahead capability to the OS can increase the maximum total amount of data that can be cached early. The maximum will be equal to the total dedicated pre-fetch size of the VD and the OS. Moreover, even if the OS cannot perform internal read ahead in certain scenarios, it can trigger read ahead on an VD so that data is still fetched from the drives to controller cache, significantly reducing latency in the read IO.

Further, in certain embodiments, host-initiated read ahead has much better predictive accuracy than the typical controller-internal (i.e., firmware-issued) read ahead. Because a host-initiated read ahead is triggered from the upper layer (*e.g.,* the host OS), the controller doesn't have to track IOs for sequential reads and predictively read consecutive stripes, as it would without input from the host-the host OS knows the file layout and LBAs on the LD. Moreover, in some embodiments, the chance of false positives in case of small-sized files is reduced or eliminated because the read ahead is triggered by the host OS, which has accurate information of the file layout and the file operations. For example, in some cases, the read ahead requests will not cross the file boundaries.

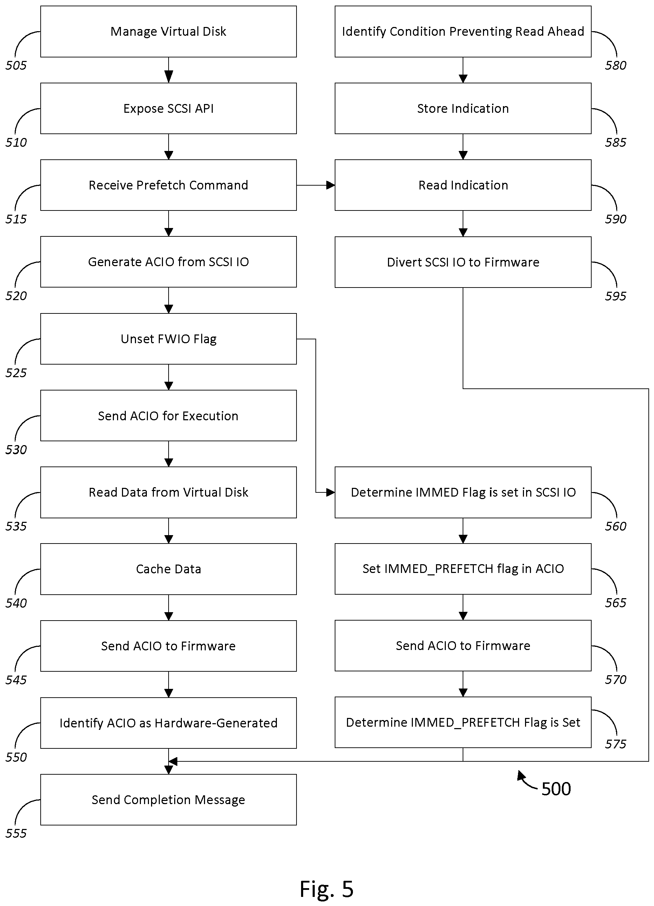

Fig. 5 illustrates a method 500 in accordance with a set of embodiments. In certain embodiments, the message flow described above with respect to Fig. 4 can be used to implement some or all of the operations of the method 500, although this is not required. The method 500 can comprise managing a VD (block 505). In some embodiments, the VD can have an architecture similar to those depicted in Figs. 1 and 2, comprising one or more spans. In some aspects, each of the spans can comprise one or more arms, and each arm arms can comprise physical storage on a physical disk. Managing a VD can comprise a variety of operations, including without limitation operations described above in the context of Fig. 3 (*e.g.,* block 305).

At block 510, the method 500 comprises exposing a small computer system interface (SCSI) API indicating that the virtual disk supports read ahead operations. In some aspects, as noted above, this might include producing a SCSI VPD with a page including a MAX_PREFETCH_LENGTH field. At block 515, the method can comprise receiving a prefetch command, e*.g.,* from a host OS. In some aspects, the prefetch command can comprise a requested SCSI IO (*e.g.,* a SCSI read IO).

At block 520, the method 500 can comprise generating an ACIO from the SCSI IO, *e.g.,* in response to receiving the SCSI IO. As noted above, in some cases, the ACIO can comprise a read ahead OPCODE, which can inform other system components (*e.g.,* firmware, buffer manager, cache manager, etc.) that the ACIO implements a read ahead operations. In some embodiments, the method 500 further comprises unsetting (*e.g.,* setting to 0) a FWIO flag in the ACIO, indicating that the ACIO is hardware-generated (which, as noted above, can indicate that the ACIO relates to a host-initiated read ahead request).

The method 500 might further comprise sending the ACIO for execution on the virtual disk (block 530). As noted above, in certain embodiments, executing the ACIO can include performing procedures to execute an ACIO similar to those described with respect to Fig. 3 above. In particular embodiments, as illustrated by Fig. 4, sending the ACIO for execution can comprise sending the ACIO to the buffer manager, which handles execution of the IO (*e.g*., by sending the ACIO (or child ACIOs derived from the ACIO) to a RAID manager and/or IO manager, which executes the ACIO(s) on the physical disks of the VD. At block 535, the device executes the ACIO to read data from the VD, and at block 540, the method 500 comprises caching the data requested by the SCSI IO (and specified by the ACIO) in a read ahead cache. As noted above, caching the data can comprise, in some embodiments, sending the ACIO to the cache manager, which caches the data. At block 545, the method comprises sending a message (*e.g.,* a completion message) comprising the ACIO to the firmware; as noted above, in some embodiments this can be performed by the cache manager.

At block 550, the method 500 comprises identifying the ACIO as a hardware-generated read ahead IO. For example, as discussed above, the firmware might identify the ACIO as hardware-generated based on the unset FWIO flag in the ACIO. At block 555, the method comprises sending a completion message (*e.g.,* to the host OS). Merely by way of example, the firmware might send the completion message to the HCU, which can then send a completion message (*e.g.,* via the HMU) to the host OS. In some cases, the completion message can indicate that the data requested by the SCSI IO has been cached (*i.e.,* that the SCSI IO has been accomplished). The nature of the completion message depends on how the device (*e.g.,* storage controller) handled the SCSI IO request. For example, if the SCSI IO did not include (or did not set) an IMMED flag, the completion message might indicate that the requested data has been cached.

In some cases, however, the device might treat the SCSI IO differently. For instance, if the host OS sets an immediate prefetch flag (*e.g.,* the IMMED flag) in the SCSI IO, indicating that the controller should confirm the status of the SCSI PRE-FETCH command immediately, the method can comprise determining that this flag is set (block 560). If so, the method 500 can include setting an ACIO immediate prefetch flag (*e.g.,* IMMED_PREFETCH) in the ACIO (block 565). In such a case, the method 500 might also include sending the ACIO directly (*e.g.,* from the CDU) to the firmware (block 570). The method 500 then can also include determining (*e.g.,* at the firmware) that the immediate prefetch flag is set (block 575). In this case, the firmware might send a completion message (block 555) that indicates that the data will be cached. At the same time, the controller might continue to perform blocks 530-550) to read the requested data and store the data in the read ahead cache, as described above. The difference in this scenario is that the device sends the completion message to the host OS as quickly as possible (in compliance with the IMMED flag in the SCSI IO) without waiting for the caching operation to complete.

In another scenario, the method 500 might include identifying a condition of the VD that prevents successful read ahead caching (block 580). Once such condition can be insufficient resources in the controller and/or VD to perform read ahead caching. (In some embodiments, read ahead caching can be performed only on a VD configured to operate in write-back mode, so a cache policy of the virtual disk requiring the RAID controller to operate in write-through mode can also prevent successful read ahead caching.).

If such a condition exists, the method 500 might include storing an indication that the device cannot successfully perform read ahead caching on the virtual disk (block 585). Merely by way of example, as mentioned above, certain embodiments will store such an indication by setting a divert prefetch control flag of a CDU VDPT entry corresponding to the VD. If this flag is set, the controller (or a component thereof, such as the CDU), will read the indication (block 590) upon receiving the SCSI IO (block 515), and based on this indication, divert the SCSI IO to the firmware (block 595), *e.g.* as described above with respect to Fig. 4. In this case, the completion message sent to the host OS will indicate that the prefetch command from the host OS cannot be completed.

One set of embodiments provides devices, including without limitation RAID controllers and/or other storage controllers. Devices in accordance with some embodiments can include devices with logic (*e.g.,* hardware circuitry and/or firmware) to perform operations in accordance with the methods described above. An exemplary device in accordance with certain embodiments provide a RAID controller to manage a virtual disk comprising one or more spans, each span comprising one or more arms, each arm corresponding a different physical disk. In an aspect, the RAID controller might comprise hardware circuitry and firmware.

In some embodiments, the hardware circuitry is configured to expose to an operating system of a host computer in communication with the RAID controller at least a portion of a small computer system interface (SCSI) block limits vital product data (VPD) page, the block limits VPD page comprising a maximum prefetch length field indicating that the virtual disk supports read ahead operations. In some embodiments, the hardware circuitry is configured to identify whether a condition of the virtual disk exists that prevents successful read ahead caching of data. In some embodiments, the condition comprises insufficient resources to perform read ahead caching. In some embodiments, the hardware circuitry is configured, if the condition exists, to set a divert prefetch control flag of an entry in a command data unit physical device property table (PDPT) of the RAID controller.

In some embodiments, the hardware circuitry is configured to receive from the operating system of the host device a prefetch command, the prefetch command comprising a requested SCSI input-output operation (IO) and an immediate prefetch flag indicating whether RAID controller should prefetch the data specified by the SCSI IO immediately. In some embodiments, the hardware circuitry is configured to determine whether the divert prefetch control flag has been set. In some embodiments, the hardware circuitry is configured, if the divert prefetch control flag is set, to divert the SCSI IO to the firmware.

If the divert prefetch control flag is not set, the hardware circuitry might be configured to generate an accelerated IO (ACIO) from the SCSI IO, the ACIO including a read ahead operation code (OPCODE) and unset a firmware IO flag in the ACIO to indicate that the ACIO is hardware generated.

In some embodiments, if the immediate prefetch flag in the SCSI IO is set, the hardware circuitry is configured to determine that the immediate prefetch flag in the SCSI IO is set and send, to the firmware, a first message comprising the SCSI IO, based at least in part on determining that the immediate prefetch flag is set in the SCSI IO.

In some embodiments, the hardware circuitry is configured to send the ACIO for execution on the virtual disk, read from the virtual disk the data requested by the SCSI IO, cache the data requested by the SCSI IO in a read ahead cache, and send a second message to the firmware, the second message comprising the ACIO and an indication the data requested by the SCSI IO has been cached.

In some embodiments, if the divert prefetch flag is set, the firmware is configured to receive the diverted SCSI IO and send a completion message indicating that the data could not be cached, based at least in part on receiving the diverted SCSI IO.

In some embodiments, if the divert prefetch flag is not set and the immediate prefetch bit in the SCSI IO is set, the firmware is configured to receive the first message, identify the ACIO as hardware generated, based at least in part on the unset firmware IO flag, determine that the immediate prefetch flag is set in the SCSI IO, and send a completion message indicating that the requested data will be cached, based at least in part on a determination that the immediate prefetch flag is set in the SCSI IO.

In some embodiments, if the divert prefetch flag is not set and if the immediate prefetch bit in the SCSI IO is not set, the firmware is further configured to receive the second message, identify the ACIO as hardware generated, based at least in part on the unset firmware IO flag, and send a completion message indicating that the requested data has been cached, based at least in part on identification of the ACIO as hardware generated.

A device in accordance with other embodiments might comprise logic to manage a virtual disk comprising one or more spans, each span comprising one or more arms, each arm corresponding a different physical disk. The device might further comprise logic to expose a small computer system interface (SCSI) application programming interface (API) indicating that the virtual disk supports read ahead operations. The device might further comprise logic to receive a prefetch command, the prefetch command comprising a requested SCSI input-output operation (IO), logic to read from the virtual disk the data requested by the SCSI IO, logic to cache the data requested by the SCSI IO in a read ahead cache, and/or logic to send a completion message indicating that the requested data has been cached.

A method in accordance with some embodiments might comprise managing a virtual disk comprising one or more spans, each span comprising one or more arms, each arm corresponding a different physical disk. The method might further comprise exposing a small computer system interface application programming interface (API) indicating that the virtual disk supports read ahead operations indicating that the virtual disk supports read ahead operations. The method might further comprise receiving a prefetch command comprising a requested SCSI input-output operation (IO), reading from the virtual disk the data requested by the SCSI IO, caching the data requested by the SCSI IO in a read ahead cache, and/or sending a completion message indicating that the requested data has been cached.

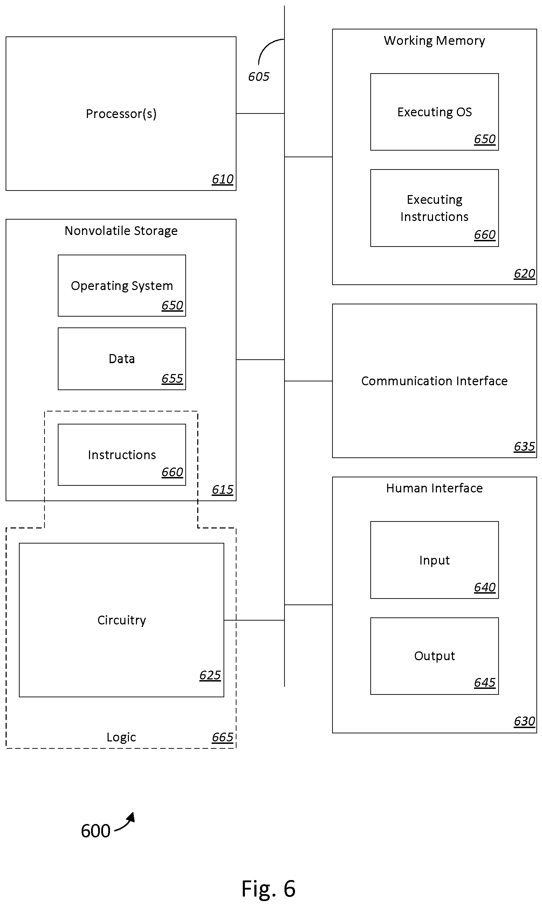

Fig. 6 is a block diagram illustrating an example of a device 600, which can function as described herein, including without limitation serving as a device, a RAID controller, a host, a computer system, etc. (or a component of any of these) in accordance with various embodiments, and/or performing some or all operations of the methods described herein. No component shown in Fig. 6 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 6, the device 600 may include a bus 605. The bus 605 can include one or more components that enable wired and/or wireless communication among the components of the device 600. The bus 605 may couple together two or more components of Fig. 6, such as via operative coupling, communicative coupling, electronic coupling, and/or electric coupling. Such components can include a processor 610, nonvolatile storage 615, working memory (*e.g.,* system dynamic random-access memory (DRAM)) 620, and/or circuitry 625. In some cases, the system 600 can include human interface components 630 and/or a communication interface 635.

While these components are displayed as integrated within the device 600, certain components might be located external from the device 600. As such, the device 600 might include, instead of or in addition to the components themselves, facilities for communicating with such external devices, which therefore can be considered part of the device 600 in some embodiments.

Merely by way of example, the nonvolatile storage 615 can include a hard disk drive (HDD), a solid-state drive (SSD), and/or any other form of persistent storage (*i.e.,* storage that does not require power to maintain the state of the stored data). While such storage often is incorporated within the device 600 itself, such storage might be external to the device 600 and can include external HDD, SSD, flash drives, or the like, as well as networked storage (*e.g.,* shared storage on a file server, etc.), storage on a storage area network (SAN), cloud-based storage, and/or the like. Unless the context dictates otherwise, any such storage can be considered part of the device 600 in accordance with various embodiments. In an aspect, the storage 615 can be non-transitory.

Similarly, the human interface 630 can include input components 640 and/or output components 645, which can be disposed within the device 600, external to the device 600, and/or combinations thereof. The input components 640 can enable the device 600 to receive input, such as user input and/or sensed input. For example, the input components 640 may include a touch screen, a keyboard, a keypad, a mouse, a button, a microphone, a switch, a sensor, a global positioning system sensor, an accelerometer, a gyroscope, and/or an actuator. In some cases, such components can be external to the device 600 and/or can communicate with components internal to the device 600 such as input jacks, USB ports, Bluetooth radios, and/or the like. Similarly, the output component 645 can enable the device 600 to provide output, such as via a display, a printer, a speaker, and/or the like, any of which can be internal to the device 600 and/or external to the device but in communication with internal components, such as a USB port, a Bluetooth radio, a video port, and/or the like. Again, unless the context dictates otherwise, any such components can be considered part of the device 600 in accordance with various embodiments.

From these examples, it should be appreciated that various embodiments can support a variety of arrangements of external and/or internal components, all of which can be considered part of the device 600. In certain embodiments, some or all of these components might be virtualized; examples can include virtual machines, containers (such as Docker containers, etc.), cloud computing environments, platform as a service (PAAS) environments, and/or the like.

In an aspect, the nonvolatile storage 615 can be considered a non-transitory computer readable medium. In some embodiments, the nonvolatile storage 615 can be used to store software and/or data for use by the device 600. Such software/data can include an operating system 650, data 655, and/or instructions 660. The operating system can include instructions governing the basic operation of the device 600 and can include a variety of personal computer or server operating systems, embedded operating systems, and/or the like, depending on the nature of the device 600. The data 655 can include any of a variety of data used or produced by the device 600 (and/or the operation thereof), such as media content, databases, documents, and/or the like. The instructions 660 can include software code, such as applications, object code, assembly, binary, etc. used to program the processor 610 to perform operations in accordance with various embodiments. In an aspect, the operating system 650 can be considered part of the instructions 660 in some embodiments.

The processor 610 can include one or more of a central processing unit, a graphics processing unit, a microprocessor, a controller, a microcontroller, a digital signal processor (DSP), programmable logic (such as a field-programmable gate array (FPGA) an erasable programmable logic device (EPLD), or the like), an application-specific integrated circuit (ASIC), a system on a chip (SoC) and/or another type of processing component. The processor 610 can be implemented in hardware, firmware, or a combination of hardware, firmware and/or software. In some implementations, the processor 610 includes one or more processors capable of being programmed to perform one or more operations or processes described elsewhere herein.

For example, in some embodiments, the device 600 can comprise logic 665. Such logic can be any sort of code, instructions, circuitry, or the like that can cause the device 600 to operate in accordance with the embodiments herein (*e.g.,* to perform some or all of the processes and/or operations described herein). Merely by way of example, the logic 665 can include the instructions 660, which might be stored on the nonvolatile storage 615 as noted above, loaded into working memory 620, and/or executed by the processor 610 to perform operations and methods in accordance with various embodiments. In an aspect, these instructions 660 can be considered to be programming the processor 610 to operate according to such embodiments. In the same way, the operating system 650 (to the extent it is discrete from the instructions 660) might be stored on the nonvolatile storage 615, loaded into working memory 620, and/or executed by a processor 610.

Alternatively, and/or additionally, logic can include the circuitry 625 (*e.g.,* hardware or firmware), which can operate independently of, or collaboratively with, any processor 610 the device 600 might or might not have. (As noted above, in some cases, the circuitry 650 itself can be considered a processor 610.) The circuitry 625 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g.,* circuitry 650) and executed directly by such circuitry, rather than being software instructions 660 loaded into working memory 620. (In some cases, this functionality can be embodied by hardware instructions). Thus, unless the context dictates otherwise, embodiments described herein are not limited to any specific combination of hardware, firmware, and/or software.

The device 600 can also include a communication interface 635, which can enable the device 600 to communicate with other devices via a wired (*e.g.,* electrical and/or optical) connection and/or a wireless (RF) connection. For example, the communication interface 660 may include one or more RF subsystems (such a Bluetooth subsystem, such as those described above, for example, a Wi-Fi subsystem, a 5G or cellular subsystem, etc.). Additionally or alternatively, some such systems can be implemented in combination, as discrete chips, as SoCs, and/or the like. The communication interface 635 can further include a modem, a network interface card, and/or an antenna. In some cases, the communication interface 630 might comprise a plurality of I/O ports, each of which can be any facility that provides communication between the device 600 and other devices; in particular embodiments, such ports can network ports, such as Ethernet ports, fiber ports, etc. Other embodiments can include different types of I/O ports, such as serial ports, pinouts, and/or the like. Depending on the nature of the device 600, the communication interface 635 can include any standard or proprietary components to allow communication as described in accordance with various embodiments.

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the embodiments in general to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components (including without limitation processors, other hardware circuitry, custom integrated circuits (ICs), programmable logic, etc.), and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, software, or a combination of any of these. It will be apparent that systems and/or methods described herein may be implemented in different forms of hardware, firmware, and/or a combination of hardware and software. The actual specialized control hardware or software code used to implement these systems and/or methods does not limit any embodiments unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (e.g., if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (e.g., related items, unrelated items, a combination of related and unrelated items, and/or the like), and may be used interchangeably with "one or more." Where only one item is intended, the phrase "only one" or similar language is used. As used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

## Claims

1. A redundant array of independent disks (RAID) controller to manage a virtual disk comprising one or more spans, each span comprising one or more arms, each arm corresponding a different physical disk, the RAID controller comprising hardware circuitry and firmware:
the hardware circuitry configured to:
expose to an operating system of a host computer in communication with the RAID controller at least a portion of a small computer system interface (SCSI) block limits vital product data (VPD) page, the block limits VPD page comprising a maximum prefetch length field indicating that the virtual disk supports read ahead operations;
receive from the operating system of the host device a prefetch command, the prefetch command comprising a requested SCSI input-output operation (IO) and a SCSI IO immediate prefetch flag indicating whether RAID controller should prefetch the data specified by the SCSI IO immediately;
generate an accelerated IO (ACIO) from the SCSI IO, the ACIO including a read ahead operation code (OPCODE);
unset a firmware IO flag in the ACIO to indicate that the ACIO is hardware generated;
if the SCSI IO immediate prefetch flag in the SCSI IO is set:
determine that the SCSI IO immediate prefetch flag in the SCSI IO is set; and
set an ACIO immediate prefetch flag in the ACIO, based at least in part on the SCSI IO immediate prefetch flag;
send the ACIO to the firmware based at least in part on determining that the SCSI immediate prefetch flag is set in the SCSI IO;
send the ACIO for execution on the virtual disk;
read from the virtual disk the data requested by the SCSI IO;
cache the data requested by the SCSI IO in a read ahead cache; and
send a cache completion message to the firmware, the cache completion message comprising the ACIO and indicating the data requested by the SCSI IO has been cached; and
the firmware configured to:
if the immediate prefetch bit in the SCSI IO is set:
receive the ACIO;
identify the ACIO as hardware generated, based at least in part on the unset firmware IO flag;
determine that the immediate prefetch flag is set in the SCSI IO; and
send an immediate completion message indicating that the requested data will be cached, based at least in part on a determination that the immediate prefetch flag is set in the SCSI IO;
if the immediate prefetch flag in the SCSI IO is not set:
receive the cache completion message;
identify the ACIO as hardware generated, based at least in part on the unset firmware IO flag; and
send a prefetch completion message indicating that the requested data has been cached, based at least in part on identification of the ACIO as hardware generated.

2. A device comprising:
logic to manage a virtual disk comprising one or more spans, each span comprising one or more arms, each arm corresponding a different physical disk;
logic to expose a application programming interface (API) indicating that the virtual disk supports read ahead operations;
logic to receive a prefetch command, the prefetch command comprising a requested SCSI input-output operation (IO);
logic to send a completion message in response to the prefetch command, the completion message indicating a status of the SCSI IO.

3. The device of claim 2, wherein:
the API comprises at least a portion of a SCSI vital product data (VPD) page,
and/or
the device comprises a redundant array of independent disks (RAID) controller,
and/or
the API comprises a maximum prefetch length field, the maximum prefetch length field indicating that the virtual disk supports read ahead caching.

4. The device of claim 2 or 3, further comprising:
logic to identify a condition of the virtual disk that prevents successful read ahead caching; and
logic to store an indication that the device cannot successfully perform read ahead caching on the virtual disk.

5. The device of claim 4, wherein the logic to store an indication that the device cannot successfully perform read ahead caching on the virtual disk comprises:
logic to set a divert prefetch control flag in a command data unit virtual disk property table (VDPT) entry corresponding to the virtual disk.

6. The device of claim 5, further comprising:
logic to divert the SCSI IO to the firmware instead of performing the SCSI IO,
in particular, wherein the completion message indicates that the data requested by the SCSI IO cannot be cached.

7. The device of any of claims 2 to 6, further comprising:
logic to read from the virtual disk the data requested by the SCSI IO; and
logic to cache the data requested by the SCSI IO in a read ahead cache.

8. The device of claim 7, further comprising:
logic to generate an accelerated IO (ACIO) from the SCSI IO; and
logic to send the ACIO for execution on the virtual disk.

9. The device of claim 8, wherein:
the ACIO comprises a read ahead operation code (OPCODE).

10. The device of claim 9, further comprising:
logic to unset a firmware IO flag in the ACIO to indicate that the ACIO is hardware generated.

11. The device of claim 10, further comprising:
logic to send a message to a firmware, the message comprising the ACIO.

12. The device of claim 11, further comprising:
logic to identify the ACIO as hardware generated, based at least in part on the firmware IO flag; wherein:
the logic to send a completion message comprises:
logic to send a completion message, based at least in part on identification of the ACIO as hardware generated,
in particular, wherein the completion message indicates that the data requested by the SCSI IO has been cached.

13. The device of any of claims 9 to 12, wherein:
the prefetch command comprises a SCSI IO immediate prefetch flag indicating whether RAID controller should prefetch the data specified by the SCSI IO immediately; and
the device further comprises:
logic to set an ACIO immediate prefetch flag in the ACIO;
logic to send the ACIO to firmware;
logic to determine that the immediate prefetch flag is set in the SCSI IO;
wherein the logic to send a completion message comprises:
logic to send a completion message indicating that the data requested by the SCSI IO will be cached, based at least in part on a determination that the ACIO immediate prefetch flag is set in ACIO.

14. The device of any of claims 2 to 13, wherein:
the logic to expose the API comprises logic to expose the API to a second device in communication with the device;
the logic to receive a prefetch command comprises logic to receive the prefetch command from the second device;
the logic to send a completion message indicating that the requested data has been cached compsrises logic to send the completion message to the second device,
in particular, wherein the second device comprises a host computer having an operating system.

15. A method, comprising:
managing a virtual disk comprising one or more spans, each span comprising one or more arms, each arm corresponding a different physical disk;
exposing a small computer system interface application programming interface (API) indicating that the virtual disk supports read ahead operations indicating that the virtual disk supports read ahead operations;
receiving a prefetch command, the prefetch command comprising a requested SCSI input-output operation (IO);
reading from the virtual disk the data requested by the SCSI IO;
caching the data requested by the SCSI IO in a read ahead cache; and
sending a completion message indicating that the requested data has been cached.
